# EUROPÄISCHE PATENTSCHRIFT

(11) **EP 2 303 802 B1**
(45) Veröffentlichungstag und Bekanntmachung des Hinweises auf die Patenterteilung: **17.10.2012**
(21) Anmeldenummer: 09776888.1
(22) Anmeldetag: 25.06.2009
(51) Int. Cl.: C04B 41/91, C04B 35/634, B01J 20/20, B01J 21/18, C09K 5/06

(54) **VERFAHREN ZUR ENTFERNUNG EINER OBERFLÄCHENSCHICHT, FORMKÖRPER UND VERWENDUNG DES FORMKÖRPERS**
METHOD FOR REMOVING A SURFACE LAYER, MOULDED BODY AND USE OF THE MOULDED BODY
PROCÉDÉ POUR ENLEVER UNE COUCHE SUPERFICIELLE, CORPS FAÇONNÉ ET UTILISATION DE CE CORPS FAÇONNÉ

(30) Priorität: 11.07.2008 DE 102008033282
(43) Veröffentlichungstag der Anmeldung: 06.04.2011
(73) Patentinhaber: BAM Bundesanstalt für Materialforschung und -prüfung, 12205 Berlin (DE); SGL Carbon AG, 65203 Wiesbaden (DE)
(72) Erfinder: MACH, Reinhard, 13059 Berlin (DE); MANECK, Heinz-Eberhard, 15745 Wildau (DE); MEYER-PLATH, Asmus, 14471 Potsdam (DE); OLESZAK, Franz, 16727 Oberkrämer (DE); CHRIST, Martin, 86159 Augsburg (DE)
(74) Vertreter: Zimmermann & Partner
(86) Internationale Anmeldenummer: PCT/EP2009/004709
(87) Internationale Veröffentlichungsnummer: WO 2010/003572

(56) Entgegenhaltungen:
- US-A- 6 027 809

## Beschreibung

Die Erfindung betrifft ein Verfahren zur Entfernung einer Oberflächenschicht aus verdichtetem expandierten Graphit von einem Formkörper aus expandiertem Graphit, einen Formkörper und Verwendungen dieses Formkörpers.

Bei der Herstellung von Formkörpern aus expandiertem Graphit, wie z.B. in EP 1 588 994 B1, DE 41 17 077 A, DE 41 17 074 A und DE 40 16 710 A beschrieben, kommt es durch den Kontakt des expandierten oder expandierenden Graphits mit der Form oder dem Formgebungswerkzeug zur Ausbildung einer Oberflächenschicht aus verdichtetem expandiertem Graphit. Der von der Form oder dem Formgebungswerkzeug auf den expandierten Graphit ausgeübte Druck verformt das zuvor hoch poröse Graphitmaterial an der Oberfläche zu einer verdichteten schichtartigen, metallisch glänzenden Struktur mit Barriereeigenschaften. Eine solche Barriereschicht reduziert die Zugänglichkeit des darunter liegenden Volumenmaterials des Formkörpers. Eine derartige Einschränkung einer Infiltration von Feststoffen, Flüssigkeiten oder Gasen in den Formkörper ist jedoch für viele Anwendungsfälle unerwünscht.

Um daher zum Beispiel die Infiltration eines flüssigen Mediums in ein poröses, aber oberflächlich verdichtetes Material aus Graphitexpandat zu erreichen, wird nach dem Stand der Technik das zu infiltrierende Graphitexpandat mit dem Infiltrationsmaterial unter Druck behandelt. Alternativ wird das zu infiltrierende Graphitexpandat evakuiert und die Flüssigkeit in das Vakuum hineingegeben (Vakuuminfiltration).

Bisher konnte die verdichtete Oberflächenschicht lediglich mit mechanischen Verfahren entfernt werden. Jedoch neigt expandierter Graphit bei mechanischer Bearbeitung zum Verschmieren, wodurch sehr leicht neue verdichtete Oberflächenbereiche gebildet werden. Darum eignen sich mechanische Verfahren wie Bürst- oder Fräsprozesse nicht zur vollständigen Entfernung verdichteter Oberflächenschichten.

US 6 027 809 A beschreibt ein Verfahren, bei dem die verdichtete Oberflächenschicht durch ein Microstrahlverfahren, Laserbehandlung oder sputtern abgetragen wird.

Es ist daher die Aufgabe der vorliegenden Erfindung, ein Verfahren zur Entfernung einer Oberflächenschicht aus verdichtetem expandierten Graphit von einem Formkörper aus expandiertem Graphit anzugeben, das die Oberflächenschicht ohne verbliebene oder neu gebildete verdichtete Bereiche vollständig entfernt, so dass der darunter liegende poröse Formkörper für eine Infiltration beliebiger, für den jeweiligen Anwendungszweck ausgewählter Stoffe direkt zugänglich ist. Diese Aufgabe wird erfindungsgemäß durch ein Verfahren mit den Merkmalen des Anspruchs 1 gelöst. Vorteilhafte Weiterbildungen dieses Verfahrens, ein nach diesem Verfahren behandelter Formkörper sowie Verwendungen dieses Formkörpers ergeben sich aus den Unteransprüchen.

Bei diesem Verfahren wird die verdichtete Oberflächenschicht durch einen plasmachemischen Trockenätzschritt entfernt, d.h., die Kohlenstoffatome der verdichteten Graphitexpandatoberfläche werden mit plasmaaktivierten Reaktivgasen in Kontakt gebracht. Dabei kommt es zur Bildung flüchtiger Reaktionsprodukte, die von der verdichteten Oberfläche des expandierten Graphits abgetragen und weggeführt werden. Als Reaktivgase können z.B. oxidierende Gase wie Sauerstoff, Kohlendioxid, Wasser und andere in reiner Form oder im Gemisch mit Inertgasen, Stickstoff, Edelgasen und anderen eingesetzt werden. Im einfachsten Fall wird Luft, d.h., mit Stickstoff verdünnter Sauerstoff, als Plasmagas eingesetzt. Die Abtragung der verdichteten Oberfläche des Formkörpers aus Graphitexpandat durch die Einwirkung eines oxidierenden Gases, wobei in der Regel als flüchtige Reaktionsprodukte Kohlenmonoxid und Kohlendioxid gebildet werden, entspricht einer kalten Verbrennung der Kohlenstoffatome der verdichteten Oberflächenschicht. In einer anderen Variante des Verfahrens werden reduzierende Plasmagase, z.B. Wasserstoff, eingesetzt, die zur Bildung flüchtiger Kohlenwasserstoffverbindungen führen. In einer weiteren Variante des Verfahrens werden z.B. Halogene als Reaktivgase eingesetzt, wobei im Fall von fluorhaltigen Gasen wie z.B. Fluor- oder Stickstofftrifluorid beispielsweise Tetrafluorkohlenstoff als flüchtiges Produkt gebildet werden kann. In einer weiteren Variante des Verfahrens können Prozessgasmischungen als Halogenquelle eingesetzt werden, z.B. Tetrafluorkohlenstoff und Sauerstoff.

Verdichtete Oberflächenbereiche können bei Einsatz des erfindungsgemäßen Verfahrens rückstandslos entfernt werden, wobei im Gegensatz zu mechanischen Verfahren die Gefahr der Bildung neuer verdichteter Oberflächenbereiche deutlich reduziert oder sogar ganz ausgeschlossen wird. Die Infiltrierbarkeit sowie die diffusive Wechselwirkung mit Gasen und Flüssigkeiten eines porösen Formkörpers aus Graphitexpandat nimmt deutlich zu. Durch örtlich selektive Entfernung der verdichteten Oberflächenschicht können Oberflächenbereiche des Formkörpers aus expandiertem Graphit geschaffen werden, in denen die Infiltration von Gasen und Flüssigkeiten in das unter der verdichteten Oberflächenschicht liegende Material oder die diffusive Wechselwirkung von Gasen und Flüssigkeiten mit dem unter der verdichteten Oberflächenschicht liegenden Material vorrangig erfolgt. Mit der Entfernung der verdichteten Oberflächenschicht geht ein Materialabtrag einher, der zur Ausbildung von in die Oberfläche eingeprägten Kanalstrukturen eingesetzt werden kann.

Bei dem vorliegenden Verfahren wird die Oberflächenschicht aus verdichtetem, expandierten Graphit eines Formkörpers aus expandiertem Graphit in einem geeignet gewählten Prozess- oder Reaktivgas mit Hilfe eines Plasmas entfernt. Das Plasma dient dabei als Quelle von hochenergetischen Spezies, wie z.B. rotatorisch, vibratorisch und/oder elektronisch angeregten Molekülen oder Radikalen, elektronisch angeregten Atomen oder Ionen der umgebenden Gasatmosphäre sowie Elektronen und Photonen. Sofern diese Spezies über hinreichend Enthalpie verfügen, aktivieren sie chemische Bindungen des Graphits, so dass es zu Bindungsbrüchen und der Bildung von Reaktionsprodukten mit Spezies des Prozessgases kommen kann, die einen Massetransport von der verdichteten Oberfläche in die Gasphase in Form flüchtiger Verbindungen wie z.B. Kohlenmonoxid und Kohlendioxid bewirken und somit die verdichtete Oberfläche abtragen und das darunter liegende Material freilegen.

Die Energieübertragung von einer Energiequelle auf die Atome oder Moleküle eines geeignet gewählten Prozessgases und die Graphitoberfläche kann durch Ionen, Elektronen, elektrische oder elektromagnetische Felder einschließlich Strahlung erfolgen. Technisch kann die Anregung eines Gases zu einem Plasma in einem sehr großen Druckbereich, insbesondere von 0,1 bis 500000 Pa, vorzugsweise im Niederdruckbereich von 1 bis 100 Pa oder im Hochdruckbereich von 50000 bis 150000 Pa, sowie im Normaldruckbereich durch eine Gleichstrom-Gasentladung oder Wechselstrom-Gasentladung, ein energiereiches elektromagnetisches Strahlungsfeld, wie es beispielsweise eine Mikrowellenquelle oder ein Laser erzeugt, oder, alternativ, eine Elektronen- oder Ionenquelle realisiert werden. Dabei kann das Plasma kontinuierlich oder diskontinuierlich betrieben werden. Die Neutralgaskomponente kann, je nach Anregungsart des Plasmas, kalt, d.h. im Bereich unterhalb von etwa 700 K, wie im Falle eines Niedertemperaturplasmas, oder heiß, d.h. im Bereich oberhalb von etwa 700 K, wie im Falle eines thermischen Plasmas, sein.

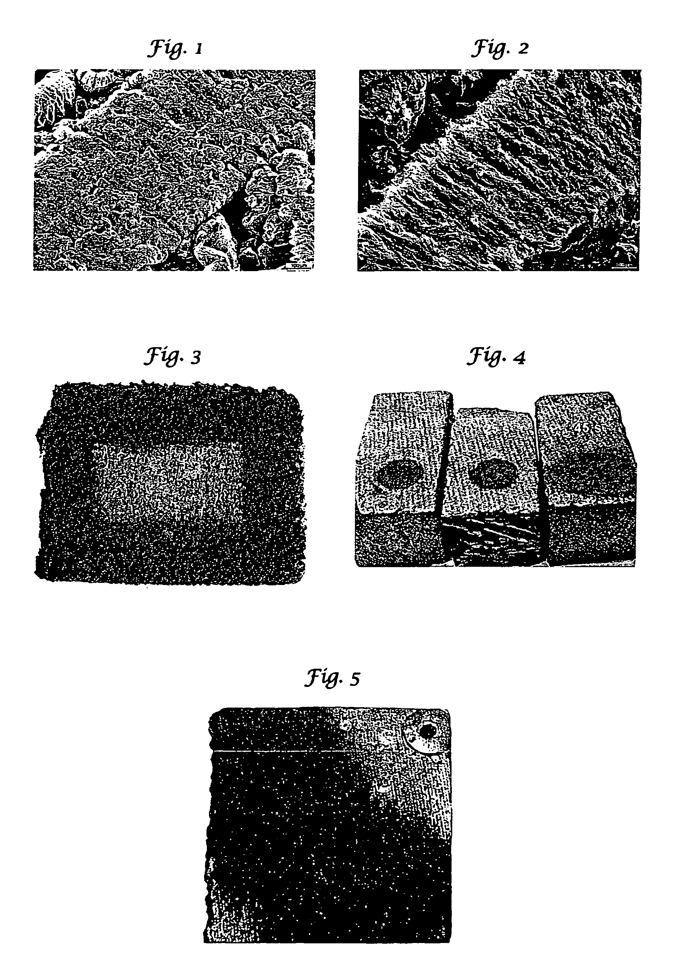

Im Folgenden wird die Erfindung anhand von mehreren Beispielen in Verbindung mit den beigefügten Fign. 1 bis 5, die jeweils fotografische Draufsichten auf eine verfahrensgemäß behandelte oder nicht behandelte Oberfläche eines porösen Formkörpers aus expandiertem Graphit zeigen, erläutert.

### Beispiel 1

Ein Formkörper mit einer Dichte von 0,04 g/cm³ aus expandiertem Graphit mit verdichteter Oberfläche wurde bei 25 Pa in einem mikrowellengespeisten Sauerstoffplasma während 500 s bei 300 W behandelt. Durch die ätzende Wirkung des Plasmas wurde die unter der verdichteten Oberfläche liegende Struktur des Formkörpers, wie in den rasterelektronenmikroskopischen Aufnahmen nach Fig. 1 (vor der Behandlung) und 2 (nach der Behandlung) gezeigt, freigelegt.

### Beispiel 2

Ein Formkörper mit einer Dichte von 0,03 g/cm³ aus expandiertem Graphit mit verdichteter Oberfläche wurde bei 25 Pa in einem mikrowellengespeisten Sauerstoffplasma während 1800 s bei 300 W behandelt. Ein Teil des Formkörpers wurde durch eine metallische Auflagemaske vor der ätzenden Wirkung des Plasmas geschützt. Wie die Fig. 3 zeigt, wurde die verdichtete Oberflächenschicht selektiv in dem den maskierten Bereich in der Mitte umgebenden, unmaskierten Außenbereich entfernt.

### Beispiel 3

Drei Formkörper mit einer Dichte von 0,03 g/cm³ aus expandiertem Graphit mit verdichteter Oberfläche wurden bei Normaldruck mit einem Plasmastrahl, der durch ein induktiv mit Radiowellen gespeistes sauerstoffhaltiges thermisches Plasma erzeugt wurde, während 5 s, 25 s und 45 s bei 8000 W Plasmaleistung behandelt. Wie Fig. 4 zeigt, wurde die verdichtete Oberflächenschicht in dem Bereich, in welchem der Plasmastrahl auf den Formkörper traf, unter Einwirkung des Plasmastrahls entfernt, wodurch die darunterliegende Struktur sichtbar wurde.

Wie Fig. 4 zeigt, führt eine längere Einwirkungsdauer des Plasmastrahls nicht nur zu einer stärkeren Abtragung in Tiefenrichtung, sondern auch zu einer größeren Abtragungsfläche.

### Beispiel 4

Ein Formkörper mit einer Dichte von 0,03 g/cm³ aus expandiertem Graphit mit verdichteter Oberfläche wurde bei Normaldruck mit einem Plasmastrahl, der durch ein induktiv mit Radiowellen gespeistes sauerstoffhaltiges thermisches Plasma erzeugt wurde, bei 8000 W Plasmaleistung behandelt. Der Plasmastrahl wurde mit einem Vorschub von 5 mm/s über die verdichtete Oberfläche bewegt. Wie Fig. 5 zeigt, wurde die verdichtete Oberflächenschicht in dem Bereich, in welchem der Plasmastrahl auf den Formkörper traf, durch Einwirkung des Plasmastrahls entfernt, wodurch die darunterliegende (dunkle) Struktur sichtbar wurde.

Die Nutzungsmöglichkeiten für von seiner verdichteten Oberflächenschicht befreiten Formkörper sind vielfältig. Bevorzugt sind Verwendungen als Filtermaterial, als Katalysatorträger sowie für Physi- oder Chemisorptionsvorgänge. Auch ist er für Kompositmaterialien, die außer dem Formkörper organische oder anorganische Füllstoffe enthalten, oder für Latentwärmespeicher, die außer dem Formkörper ein Latentwärme-Speichermaterial enthalten, einsetzbar.

## Patentansprüche

1. Verfahren zur Entfernung einer Oberflächenschicht aus verdichtetem expandierten Graphit von einem Formkörper aus expandiertem Graphit, **dadurch gekennzeichnet, dass** die Oberflächenschicht mit einem plasmaaktivierten Reaktivgas in Kontakt gebracht wird, das mit den Kohlenstoffatomen des Graphits flüchtige Reaktionsprodukte bildet.

2. Verfahren nach Anspruch 1, **dadurch gekennzeichnet, dass** als Reaktivgas ein oxidierendes und/oder reduzierendes und/oder halogenhaltiges Gas verwendet wird.

3. Verfahren nach Anspruch 1 oder 2, **dadurch gekennzeichnet, dass** dem Reaktivgas ein Edel- und/oder Inertgas zugesetzt wird.

4. Verfahren nach einem der Ansprüche 1 bis 3, **dadurch gekennzeichnet, dass** das Reaktivgas durch ein elektrostatisches Feld oder ein elektromagnetisches Wechselfeld plasmaaktiviert wird.

5. Verfahren nach Anspruch 4, **dadurch gekennzeichnet, dass** das Plasma mit elektromagnetischen Anregungsfrequenzen im Niederfrequenzbereich bis 10 kHz oder im Radiofrequenzbereich zwischen 10 kHz und 300 MHz erzeugt wird.

6. Verfahren nach Anspruch 4, **dadurch gekennzeichnet, dass** das Plasma mit elektromagnetischen Anregungsfrequenzen im Mikrowellenbereich zwischen 300 MHz und 300 GHz erzeugt wird.

7. Verfahren nach Anspruch 4, **dadurch gekennzeichnet, dass** das Plasma mit elektromagnetischen Anregungsfrequenzen im Bereich oberhalb von 300 GHz, vorzugsweise durch Laserstrahlung, erzeugt wird.

8. Verfahren nach einem der Ansprüche 1 bis 3, **dadurch gekennzeichnet, dass** das Reaktivgas durch einen Elektronen- oder durch einen Ionenstrahl plasmaaktiviert wird.

9. Verfahren nach einem der Ansprüche 1 bis 8, **dadurch gekennzeichnet, dass** die Oberflächenschicht nur in Teilbereichen entfernt wird durch Verwenden einer den Kontakt zwischen der Oberflächenschicht und dem plasmaaktivierten Reaktivgas verhindernden Abdeckmaske oder eines stationären oder bewegten, nur in ausgewählten Bereichen wirksamen Plasmastrahls.

10. Formkörper, bei dem Oberflächenschicht durch das Verfahren nach einem der Ansprüche 1 bis 9 entfernt wurde, **dadurch gekennzeichnet, dass** er eine poröse Struktur aufweist.

11. Verwendung des Formkörpers nach Anspruch 10 als Filtermaterial.

12. Verwendung des Formkörpers nach Anspruch 10 als Katalysatorträger.

13. Verwendung des Formkörpers nach Anspruch 10 für Physi- oder Chemisorptionsvorgänge.

14. Verwendung des Formkörpers nach Anspruch 10 in Kompositmaterialien, die außer dem Formkörper organische oder anorganische Füllstoffe enthalten.

15. Verwendung des Formkörpers nach Anspruch 10 in Latentwärmespeichern, die außer dem Formkörper ein Latentwärme-Speichermaterial enthalten.

## Claims

1. A method for removing a surface layer of compressed expanded graphite from a molded body of expanded graphite,
**characterized in that**
the surface layer is brought into contact with a plasma-activated reactive gas, which forms volatile reaction products with the carbon atoms of the graphite.

2. The method according to Claim 1,
**characterized in that**
an oxidizing and/or reducing and/or halogenated gas is used as the reactive gas.

3. The method according to Claim 1 or 2,
**characterized in that**
a noble gas and/or an inert gas is added to the reactive gas.

4. The method according to any one of Claims 1 to 3,
**characterized in that**
the reactive gas is plasma-activated by an electrostatic field or an electromagnetic alternating field.

5. The method according to Claim 4,
**characterized in that**
the plasma is generated with electromagnetic excitation frequencies in the low-frequency range to 10 kHz or in the radiofrequency range between 10 kHz and 300 MHz.

6. The method according to Claim 4,
**characterized in that**
the plasma is generated with electromagnetic excitation frequencies in the microwave range between 300 MHz and 300 GHz.

7. The method according to Claim 4,
**characterized in that**
the plasma is generated with electromagnetic excitation frequencies in the range above 300 GHz, preferably by laser beams.

8. The method according to any one of Claims 1 to 3,
**characterized in that**
the reactive gas is plasma-activated by an electron beam or by an ion beam.

9. The method according to any one of Claims 1 to 8,
**characterized in that**
the surface layer is removed only in partial areas by using a covering mask, which prevents contact between the surface layer and the plasma-activated reactive gas, or by a stationary or moving plasma beam, which is active only in selected areas.

10. A molded body on which the surface layer has been removed by the method according to any one of Claims 1 to 9,
**characterized in that**
it has a porous structure.

11. Use of the molded body according to Claim 10 as a filter material.

12. Use of the molded body according to Claim 10 as a catalyst carrier.

13. Use of the molded body according to Claim 10 for physisorption or chemisorption processes.

14. Use of the molded body according to Claim 10 in composite materials, which contain organic or inorganic fillers in addition to the molded body.

15. Use of the molded body according to Claim 10 in latent heat storage mechanisms, which contain a latent heat storage material in addition to the molded body.

## Revendications

1. Procédé pour éliminer une couche superficielle de graphite expansé comprimé sur un corps moulé en graphite expansé, **caractérisé en ce qu'**on amène la couche superficielle en contact avec un gaz réactif activé par plasma, qui avec les atomes de carbone du graphite créé des produits de réaction volatils.

2. Procédé selon la revendication 1, **caractérisé en ce qu'**en tant que gaz réactif, on utilise un gaz oxydant et/ou réducteur et/ou halogéné.

3. Procédé selon la revendication 1 ou la revendication 2, **caractérisé en ce qu'**on ajoute au gaz réactif un gaz rare et/ou un gaz inerte.

4. Procédé selon l'une quelconque des revendications 1 à 3, **caractérisé en ce qu'**on active le gaz réactif au plasma par un champ électrostatique ou par un champ électromagnétique alternatif.

5. Procédé selon la revendication 4, **caractérisé en ce qu'**on créé le plasma à l'aide de fréquences d'excitation dans la gamme de basses fréquences de jusqu'à 10 kHz ou dans la gamme de radiofréquences comprise entre 10 kHz et 300 MHz.

6. Procédé selon la revendication 4, **caractérisé en ce qu'**on créé le plasma à l'aide de fréquences d'excitation électromagnétiques dans la gamme des micro-ondes comprise entre 300 MHz et 300 GHz.

7. Procédé selon la revendication 4, **caractérisé en ce qu'**on créé le plasma à l'aide de fréquences d'excitation électromagnétiques dans la gamme supérieure à 300 GHz, de préférence par rayonnement laser.

8. Procédé selon l'une quelconque des revendications 1 à 3, **caractérisé en ce qu'**on active le gaz réactif au plasma par un faisceau électronique ou par un faisceau ionique.

9. Procédé selon l'une quelconque des revendications 1 à 8, **caractérisé en ce qu'**on retire la couche superficielle seulement dans des zones partielles par utilisation d'un cache de masquage empêchant le contact entre la couche superficielle et le gaz réactif activé au plasma ou par un jet de plasma stationnaire ou déplacé, uniquement actif dans les zones choisies.

10. Corp moulé, sur lequel on a éliminé une couche superficielle à l'aide du procédé selon l'une quelconque des revendications 1 à 9 **caractérisé en ce qu'**il présente une structure poreuse.

11. Utilisation du corps moulé selon la revendication 10 en tant que matériel de filtrage.

12. Utilisation du corps moulé selon la revendication 10 en tant que support de catalyseur.

13. Utilisation du corps moulé selon la revendication 10 pour des processus physiques ou chimiques.

14. Utilisation du corps moulé selon la revendication 10 dans des matières composites, qui hormis le corps moulé, contiennent des agents de charge organiques ou inorganiques.

15. Utilisation du corps moulé selon la revendication 10 dans des accumulateurs de chaleur latente, qui hormis le corps moulé, contiennent une matière accumulatrice de chaleur latente.
